# EUROPÄISCHE PATENTSCHRIFT

(11) **EP 1 153 683 B1**
(45) Veröffentlichungstag und Bekanntmachung des Hinweises auf die Patenterteilung: **10.12.2003**
(21) Anmeldenummer: 01110307.4
(22) Anmeldetag: 26.04.2001
(51) Int. Cl.: B23B 29/034

(54) **Schälkopf und Verfahren zum Ausschälen von Zylindern, Zylinderrohren u. dgl**
Peeling head and method for peeling of cylinders, tubes and the like
Tête d'épluchage et procédé pour peler des cylindres, tubes ou similaire

(30) Priorität: 13.05.2000 DE 10023535
(43) Veröffentlichungstag der Anmeldung: 14.11.2001
(73) Patentinhaber: Ecoroll AG, Werkzeugtechnik, 29227 Celle (DE)
(72) Erfinder: Ostertag, Alfred, Dipl.-Ing., 29229 Celle (DE)
(74) Vertreter: Castell, Klaus, Dr.-Ing.

(56) Entgegenhaltungen:
- GB-A- 2 032 820
- GB-A- 2 084 056
- US-A- 4 229 127

## Beschreibung

Die Erfindung betrifft einen Schälkopf und ein Verfahren zum Ausschälen von Zylindern, Zylinderrohren u. dgl. unter Verwendung eines Schälkopfes, wobei der Schälkopf über eine Anzahl radial pendelnd im Schälkopf angeordneter Schälmesser verfügt.

Solche Verfahren und Schälköpfe sind bekannt, z.B. aus der DE 22 23 969 oder der DE 27 23 622 (nächstliegender Stand der Technik). Sie dienen zur Bearbeitung, insbesondere Feinbearbeitung zylindrischer Bohrungswände wie sie sich z.B. in Hydraulikzylindern und Zylinderrohren finden. Solche Bohrungswände werden am wirtschaftlichsten durch Schälen und Glattwalzen feinbearbeitet. Ausgangsmaterial sind in der Regel gezogene Präzisionsstahlrohre oder durch Aufbohren vorbereitete Flußstahlrohre mit einer geringen Bearbeitungszugabe von ca. 0,3 bis 1 mm im Durchmesser. Diese Rohre weisen fertigungsbedingte Geradheitsfehler auf, die dem Verwendungszweck der Rohre nicht abträglich sind und die daher durch das Schälen nicht korrigiert werden müssen.

Allerdings muß die Oberfläche der Bohrungswand auch bei gekrümmten Zylindern vollflächig geschält und glattgewalzt werden. Dies setzt unter den gegebenen Bedingungen voraus, dass das Schälmesser der Makroform des Rohres bei nahezu konstanter Spantiefe folgt. Hierzu haben sich schwimmend angeordnete Schälmesser bewährt, wie sie z.B. aus der bereits genannten DE 27 23 622 oder der DE 25 18 170 bekannt sind. Der Schälkopf ist dabei gegenüber dem Werkzeug in zwei Ebenen radial frei beweglich, und das bzw. die Schälmesser sind zusätzlich radial beweglich.

Die bekannte Anordnung der Schälmesser gewährleistet die Selbstzentrierung der Messer durch die Passivschnittkräfte beider Schneiden auch dann, wenn der Schälkopf durch Einwirkung äußerer Kräfte nicht zentrisch rotiert. Nachteilig bei dieser Anordnung ist jedoch, dass die mit zwei gegenüberliegend angeordneten Schneiden ausgestatteten Schälmesser nicht zwangsläufig eine kreisrunde Bohrung herstellen. Vielmehr können derartige Schälmesser während der Rotation des Schälkopfes eine radial oszillierende Bewegung ausführen und dabei einen von der Kreisform abweichenden Bohrungsquerschnitt erzeugen. Diese Bewegung kann durch einen bereits im Rohr vorhandenen Kreisformfehler oder eine geringfügige Störung des Kräftegleichgewichts, etwa durch schwankende Passivschnittkraft beim regelmäßig erwünschten Spanbruch, hervorgerufen werden und kann sich aufschwingen und sich über die gesamte Bearbeitungslänge fortsetzen.

Charakteristisch für derartige Bohrungsprofile ist, dass die Bohrung gemessen zwischen zwei gegenüberliegenden Punkten zwar einen konstanten Durchmesser aufweist, dass der Innenhüllkreis jedoch kleiner und der Außenhüllkreis größer ist als der im Zwei-Punkt-Verfahren gemessene Schäldurchmesser. Es können dabei "Polygone" mit 3, 5, 7 oder mehr "Ecken" entstehen. Dieser Kreisformfehler kann beim Zusammenbau mit Kolben und Dichtungen zu Problemen führen. Häufig verläuft der Kreisformfehler über die Rohrlänge mit einem Winkelversatz von einer Werkzeugumdrehung zur nächsten, so dass man eine wendelförmige Kontur der Zylinderbohrung erhält, die in der Regel als Qualitätsmangel gilt.

Es sind auch Werkzeuge ohne Pendelmesser bekannt. Hierzu zählen die Reibahlen wie sie beispielsweise in der DE 19 62 181 B, DE 16 52 790 A, DE 73 21 746 U und US 26 38 020 beschrieben sind. Die Reibahlenmesser sind alle nur gemeinsam um das gleiche Maß zum Werkzeuggrundkörper verstellbar und daher nicht radial pendelnd eingebaut. Reibahlen sind von der Konzeption her darauf ausgelegt, Bohrungen mit möglichst geringem Geradheitsfehler zu erzeugen. Der weitere Bearbeitungsfortschritt erfolgt daher in Fortsetzung der bisherigen Richtung der Bohrung. Sollte die Vorbohrung gekrümmt sein, so wird von den Reibahlen erwartet, dass sie diese Krümmung möglichst vollständig beseitigen.

Zylinderrohre werden aus gezogenen Präzisionsstahlrohren mit einer Länge bis zum 10 m hergestellt. Bedingt durch das bis dahin spanlose Fertigungsverfahren weisen diese Rohre Geradheitsfehler bis zu 2 mm/m auf. Gleichzeitig aber wird aus Kostengründen und zur Materialeinsparung mit Bearbeitungszugaben unter 1 mm im Durchmesser gearbeitet. Dies bedeutet, dass nicht genügend Bearbeitungszugabe zur Verfügung steht, um aus der gekrümmten eine gerade Bohrung zu machen. Hierfür wäre bei der oben angegebenen Krümmung eine Bearbeitungszugabe von mindestens 4 mm im Durchmesser erforderlich. Werkzeuge, die wie die oben beschriebenen Reibahlen auf die Herstellung von möglichst geraden Bohrungen ausgelegt sind, würden an manchen Stellen viel Material zerspanen und dafür andere Stellen wieder unbearbeitet lassen. An einen Schälkopf zum Ausschälen von Zylindern, Zylinderrohren und dergleichen wird daher die Anforderung gestellt, dass das Schälwerkzeug bei der Bearbeitung der Makroform der Bohrung folgt und damit die vorhandenen Geradheitsfehler nachbildet. Dieser Anforderung werden die Reibahlen nicht gerecht.

Davon ausgehend liegt der Erfindung die Aufgabe zugrunde, einen Schälkopf und ein Verfahren zum Ausschälen anzugeben, welche es ermöglichen, den Kreisformfehler weitestgehend zu eliminieren und das Auftreten der wendelförmigen Wellen zu verhindern.

Die Aufgabe wird gelöst von einem Schälkopf gemäß Anspruch 1 mit im Schälkopf radial pendelnd angeordneten Schälmessern, bei welchem wenigstens drei Schälmesser vorgesehen sind. Mit einer solchen Ausgestaltung des Schälkopfes kann sowohl die Forderung nach Selbstzentrierung des Schälmessersatzes, als auch nach kreisrunder Schälgeometrie bei gleichbleibender Spantiefe erfüllt werden.

Zudem hat die Erfindung den großen Vorteil, dass durch das Vorsehen von wenigstens drei Schälmessern die Schälleistung gegenüber den bekannten Schälköpfen mit nur zwei Schälmessern erhöht werden kann.

Bei einer bevorzugten Ausführungsform der Erfindung, bei der der Schälkopf eine Mittelachse aufweist, ist vorgesehen, dass benachbarte Schälmesser in Richtung der Mittelachse des Schälkopfes gesehen jeweils in ähnlichen Winkelabständen zueinander angeordnet sind. Dies gewährleistet in jeder Rotationsposition des Schälkopfes die größtmögliche Zentrierwahrscheinlichkeit. Der Winkelabstand würde dementsprechend bei drei Schälmessern 120, bei vier Schälmessern 90, bei fünf Schälmessern 72 und bei sechs Schälmessern jeweils 60 Grad betragen. Diese Winkel können auch geringfügig von Sektor zu Sektor variieren wenn dies zur Vermeidung von Rattermarken zweckmäßig ist.

Bei einer weiteren bevorzugten Ausführungsform der Erfindung, bei der der Schälkopf eine Mittelachse und jedes Schälmesser wenigstens eine Schneide aufweist, ist vorgesehen, dass wenigstens drei Schneiden unterschiedlicher Schälmesser rotationssymmetrisch zur Mittelachse des Schälkopfes angeordnet sind, was bedeutet, dass zu einer Schneide eines Schälmessers auf wenigstens zwei anderen Schälmessern entsprechende Schneiden vorgesehen sind, so dass entsprechende Punkte entsprechender Schneiden jeweils eine Ebene definieren, die senkrecht zur Mittelachse des Schälkopfes verläuft. Da die Mittelachse des Schälkopfes beim Betrieb des Schälkopfes die Hauptrotationsachse ist, wirkt sich diese Anordnung der Schneiden ebenfalls positiv auf die Zentrierung des Schälkopfes in der auszuschälenden Bohrung aus.

Die Schälleistung kann noch weiter dadurch erhöht werden, dass jedes Schälmesser wenigstens zwei Schneiden aufweist.

Bei einer besonders vorteilhaften Ausführungsform der Erfindung werden alle Schälmesser durch einen gemeinsamen, im Schälkopf verschieblich angeordneten konischen oder pyramidalen Körper direkt oder indirekt abgestützt und sind mittels dieses Körpers radial zum Schälkopf verschieblich. Dabei kann je nach Ausgestaltung des Schälkopfes der Körper sowohl die Form eines Kegels oder Kegelstumpfes als auch einer Pyramide oder eines Pyramidenstumpfes besitzen, wobei der Begriff Pyramide hier nicht etwa im landläufigen Sinne auf solche regelmäßigen Polyeder beschränkt ist, die eine quadratische Grundfläche und vier kongruente gleichschenklige Dreiecke als Seitenflächen besitzen, sondern der Begriff Pyramide im Sinne der geometrischen Definition zu verstehen ist und insbesondere eine Grundfläche mit so vielen Seiten besitzen kann, wie Schälmesser vorgesehen sind.

Sowohl ein konischer als auch ein pyramidaler Körper erlauben vorteilhaft, durch einfaches Verschieben des Körpers entlang der Mittelachse des Schälkopfes die Schälmesser radial nach außen zu drücken und so den entsprechenden Schäldurchmesser in besonders einfacher Weise einzustellen.

Dabei hat es sich beim Betrieb als besonders vorteilhaft erwiesen, den konischen oder pyramidalen Körper schwimmend im Schälkopf anzuordnen. Vorteilhaft ist auch das Vorsehen von Mitteln zur veränderbaren Festlegung einer ersten Relativposition des konischen oder pyramidalen Körpers relativ zu den Schälmessern, wobei der konische oder pyramidale Körper mittels entsprechender Federmittel in die erste Relativposition vorgespannt werden kann. Diese erste Relativposition ist in der Regel die Arbeitsposition des Schälkopfes, bei der also die Schälmesser auf den gewünschten Schäldurchmesser eingestellt sind.

Um den Schälkopf leicht und ohne das Entstehen von Markierungen aus dem ausgeschälten Körper zurückzuziehen zu können, kann der konische oder pyramidale Körper so ausgebildet werden, dass er gegen die Vorspannung durch Anwendung einer äußeren, insbesondere hydraulischen Kraft in eine zweite Relativposition relativ zu den Schälmessern bewegbar ist, wobei diese zweite Relativposition einer zurückgezogenen Stellung der Schälmesser entspricht, so dass diese also nicht mehr eng an der auszuschälenden Fläche anliegen und der Schälkopf leicht in dem auszuschälenden Körper beweg- und positionierbar bar ist.

Um zu gewährleisten, dass die Schälmesser stets gut an dem konischen oder pyramidalen Körper direkt oder indirekt anliegen und also der durch Veränderung der Relativposition von konischem oder pyramidalem Körper und den Schälmessern gewünschten Einstellung des Schäldurchmessers folgen, können vorteilhaft Federmittel vorgesehen sein, die die Schälmesser gegen den konischen oder pyramidalen Körper vorspannen.

Vorteilhaft ist es, wenn diese zweiten Federmittel so angeordnet sind, dass ihre Wirkungsrichtung nicht durch die Mitte des Werkzeugs verläuft.

Um ein Verkanten der Schälmesser zu verhindern, wird weiterhin vorgeschlagen, dass die Schälmesser in Führungen geführt sind, deren Verhältnis Länge zu Breite größer als 1,5, vorzugsweise größer als 2, ist. Das Verhältnis von Länge zu Breite kann sogar 4 bis 5 erreichen, um eine gute Führung zu erzielen. Hierbei ist unter Länge die Erstreckung der Führung in radialer Richtung zu verstehen, während unter Breite die Erstreckung der Führung in axialer Richtung verstanden wird.

Die genannte Aufgabe wird ferner gelöst von einem Verfahren zum Ausschälen eines Zylinders, Zylinderrohres oder dgl. mittels eines in den auszuschälenden Körper eingeführten Schälkopfes mit einer Mittelachse und einer Anzahl von Schälmessern, wobei ein Schälkopf mit wenigstens drei relativ zur Mittelachse des Schälkopfes radial beweglichen Schälmessern verwendet wird.

Bei einer bevorzugten Ausführungsform des Verfahrens, wobei jedes verwendete Schälmesser wenigstens eine Schneide aufweist, ist vorgesehen, dass der radiale Abstand der Schneiden zur Mittelachse des Schälkopfes - und damit der Schäldurchmesser - mittels eines im Schälkopf beweglich angeordneten konischen oder pyramidalen Körpers eingestellt wird.

Weitere Einzelheiten und Vorteile der Erfindung ergeben sich aus der nachfolgenden rein beispielhaften und nicht beschränkenden Beschreibung eines Ausführungsbeispiels eines erfindungsgemäßen Schälkopfes in Verbindung mit der Zeichnung, in welcher
- Fig. 1: einen erfindungsgemäßen Schälkopf in entlang der Mittelachse teilweise geschnittener Seitenansicht zeigt,
- Figur 1a: eine Detailansicht des in Figur 1 gezeigten Schälkopfes im Bereich der Messer,
- Fig. 2: eine in Richtung der Mittelachse gesehene teilweise aufgeschnittene Ansicht des Schälkopfes gemäß Fig. 1 ist,
- Fig. 3: die Wirkungsweise der zentrierenden Kräfte beim Betrieb des Schälkopfes verdeutlicht und
- Figur 4: eine alternative Ausführungsform eines Schälkopfes in entlang der Mittelachse teilweise geschnittener Seitenansicht.

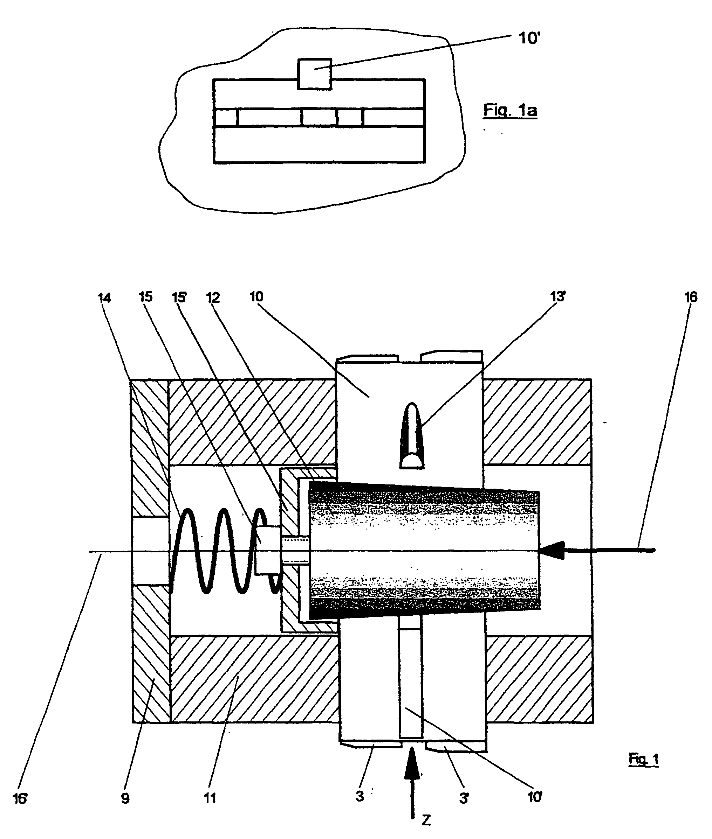

In den Figuren 1 bis 3 ist ein in seiner Gesamtheit mit 9 bezeichneter Schälkopf gezeigt, bei welchem insgesamt sechs Schälmesser 10 in einem zylindrischen Gehäuse 11 radial verschieblich angeordnet sind.

Jedes Schälmesser 10 verfügt bei diesem Ausführungsbeispiel über zwei Schneiden 3 und 3'. Die Schälmesser 10 sind in Führungen 10' mit großem Längen-/ Breitenverhältnis geführt, die ein Verkanten der Schälmesser verhindern. Im gezeigten Ausführungsbeispiel ist diese Führung mehr als dreimal - genau genommen sogar mehr als fünfmal - länger als breit.

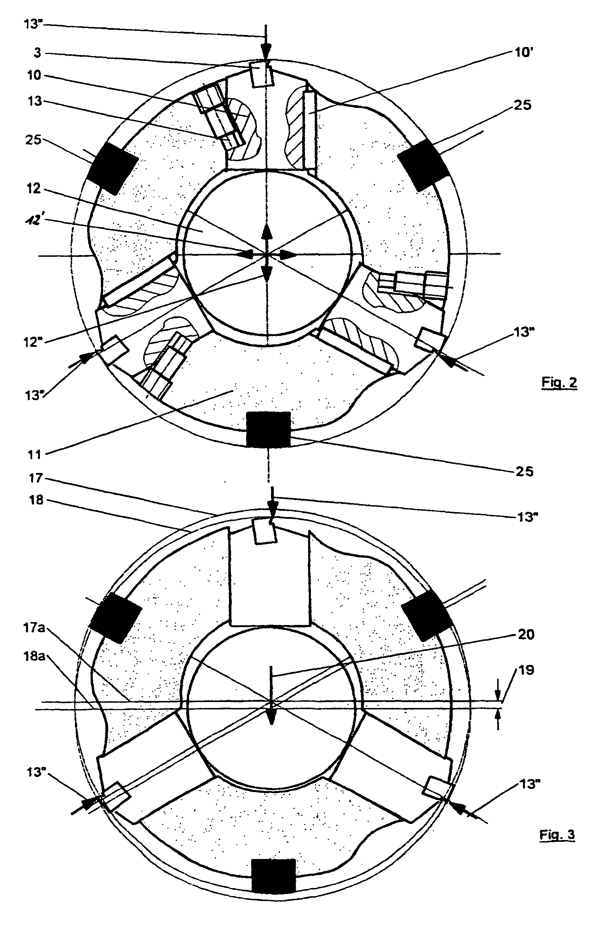

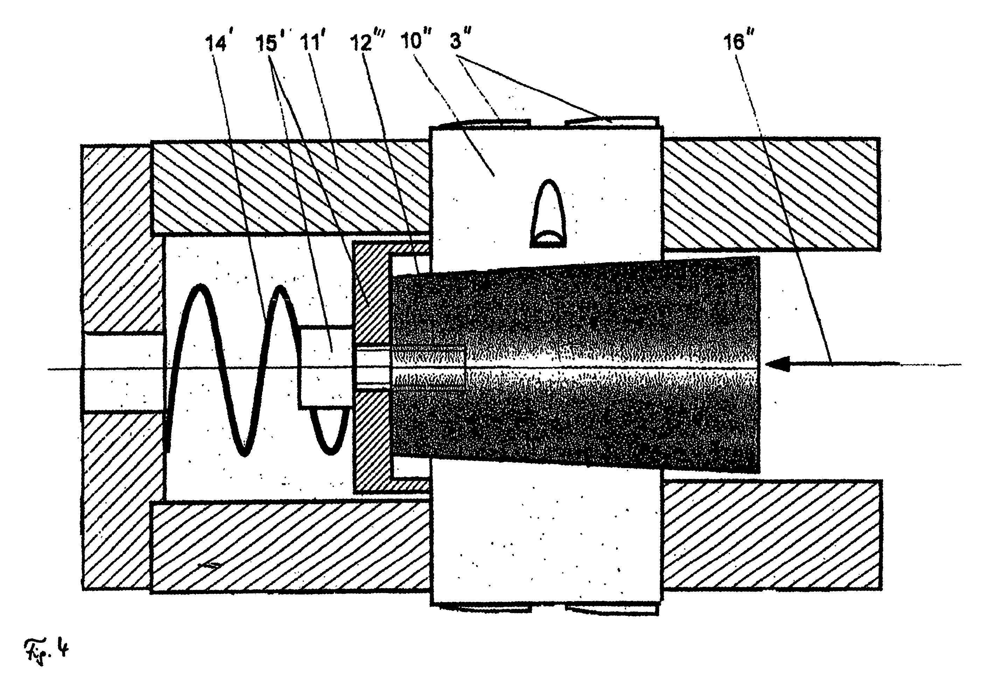

Wie in Fig. 2 beispielhaft bei nur einem Messer angedeutet wird jedes Schälmesser 10 durch Federmittel, hier in Form von Druckfederelementen 13, radial nach innen gegen einen zur Einstellung des Schäldurchmessers dienenden konischen Körper, hier in Form eines Kegelstumpfes 12, gedrückt. Dazu weist jedes Schälmesser 10 eine Aufnahme 13' für jeweils ein Druckfederelement 13 auf, wobei an dieser Stelle noch einmal betont sei, dass - anders als in Fig. 2 dargestellt - jedes Schälmesser 10 mittels eines Druckfederelementes 13 in Richtung auf den Kegel vorgespannt wird, wie durch die Pfeile 13" in den Figuren 2 und 3 angedeutet, von denen aus Gründen der Übersichtlichkeit nur einige mit Bezugszeichen versehen wurden.

Die Druckfederelemente 13 sorgen während des Schälens und im eingefahrenen Zustand, in dem sich also die Schälmesser in einer in radialer Richtung gesehen zur Mittelachse hin zurückgezogenen Position befinden, für dauernden Kontakt der Messer 10 mit dem Kegelstumpf 12.

Zur Festlegung einer ersten Relativposition von Kegelstumpf 12 und Schälmessern 10 ist eine Schrauben-Abstandselement-Kombination 15 vorgesehen. Federmittel, hier in Form einer Schraubenfeder 14, spannen den Kegelstumpf in diese Relativposition vor, die der Arbeitsposition, in der das Werkzeug zum Schälen bereit ist, entspricht.

Durch Aufbringen einer Kraft in Richtung des Pfeiles 16 z.B. mittels einer an sich bekannten, hier nicht weiter dargestellten Hydraulik, kann der Kegelstumpf 12 entlang der gemeinsamen Mittelachse 16' von Schälkopf 9 und Kegelstumpf 12 gegen die Vorspannung der Feder 14 verschoben werden, wodurch sich die Schälmesser 10 radial nach innen in eine zurückgezogene Position bewegen.

Der Kegelstumpf 12 ist schwimmend im Schälkopf 9 angeordnet. Wie in Fig. 3 dargestellt, bedeutet ein Geradheitsfehler eines auszuschälenden Zylinderrohres um das Maß 19 eine Änderung der Bohrungskontur 17 und der Bohrungsachse 17a um das Maß 19 in die Position 18 bzw. 18a. Dies führt zu einer Zunahme der Passivschnittkräfte aller in der Zeichnung oberhalb der Mitte arbeitenden Schneiden und gleichzeitig zu einer Abnahme der in der Zeichnung unteren Kräfte. Darauf reagiert der Kegelstumpf 12 mit einer radialen Abwärtsbewegung 20 um das Maß 19. Auf diese Weise zentriert sich der gesamte Messersatz unter Beibehaltung der Hüllkreisgeometrie auf die neue Rohrmitte. Damit sind die Forderungen nach Selbstzentrierung des Schälmessersatzes, kreisrunder Schälgeometrie und gleichbleibender Spantiefe erfüllt. Die Kompensationsbewegung erfolgt unter Rotation des Schälwerkzeuges oder bei stillstehendem Werkzeug und rotierendem Werkstück fortlaufend und kann je nach Rohrkrümmung in beliebiger Richtung ausgeführt werden.

Die Figur 4 zeigt eine Ausführungsform, bei der die Kraft 16" an der breiten Seite des Kegelstumpfes 12''' angreift und die Schraubenfeder 14' über die Schraubenabstandselementkombination 15' am kleineren Durchmesser des Kegelstumpfes 12''' angreift. Auch diese Anordnung bewirkt ein Verschieben der Schneiden 3" und des Schälmesser 10' relativ zum Gehäuse 11' .

Im Rahmen des Erfindungsgedankens sind zahlreiche Abwandlungen und Weiterbildungen möglich, die sich z.B. auf die Anzahl und Anordnung der Schälmesser und der Schneiden beziehen. So ist es z.B. insbesondere zum Ausschälen großer Durchmesser möglich, Schälköpfe zu verwenden, die mehr als die beispielhaft gezeigten drei Schälmesser aufweisen. Erfindungswesentlich ist jedenfalls, dass mehr als zwei Schälmesser vorgesehen werden, was die Wahrscheinlichkeit des Auftretens einer unbeabsichtigten radialen Oszillation deutlich verringert.

## Patentansprüche

1. Schälkopf (9) zum Ausschälen von Zylindern, Zylinderrohren u. dgl. mit im Schälkopf radial pendelnd angeordneten Schälmessern, ***dadurch gekennzeichnet, dass*** wenigstens drei Schälmesser (10) vorgesehen sind, ***dass*** alle Schälmesser (10) durch einen gemeinsamen im Schälkopf verschieblich angeordneten konischen oder pyramidalen Körper (12) direkt oder indirekt abgestützt werden und mittels selbigem radial zum Schälkopf verschieblich sind, ***dass*** der konische oder pyramidale Körper (12) mit zwei Freiheitsgraden (12', 12 ") schwimmend im Schälkopf (9) gelagert ist, und ***dass*** zweite Federmittel (13) zur Vorspannung jeden Schälmessers gegen den konischen oder pyramidalen Körper (12) vorgesehen sind.

2. Schälkopf nach Anspruch 1, wobei der Schälkopf eine Mittelachse (16') aufweist, ***dadurch gekennzeichnet, dass*** benachbarte Schälmesser (10) in Richtung der Mittelachse (16') des Schälkopfes (9) gesehen jeweils in ähnlichen Winkelabständen zueinander angeordnet sind.

3. Schälkopf nach Anspruch 1 oder 2, wobei der Schälkopf (9) eine Mittelachse (16') und jedes Schälmesser (10) wenigstens eine Schneide (3, 3') aufweist, ***dadurch gekennzeichnet, dass*** wenigstens drei Schneiden unterschiedlicher Schälmesser rotationssymetrisch zur Mittelachse des Schälkopfes angeordnet sind.

4. Schälkopf (9) nach Anspruch 1, ***dadurch gekennzeichnet, dass*** Mittel (15, 15') zur veränderbaren Festlegung einer ersten Relativposition des konischen oder pyramidalen Körpers (12) relativ zu den Schälmessern (10) vorgesehen sind.

5. Schälkopf nach Anspruch 4, ***dadurch gekennzeichnet, dass*** erste Federmittel (14) zur Vorspannung des konischen oder pyramidalen Körpers (12) in die erste Relativposition vorgesehen sind.

6. Schälkopf nach Anspruch 5, ***dadurch gekennzeichnet, dass*** der konische oder pyramidale Körper gegen die Vorspannung durch Anwendung einer äußeren Kraft (16) insbesondere hydraulisch in eine zweite Relativposition bewegbar ist.

7. Schälkopf nach Anspruch 6, ***dadurch gekennzeichnet, dass*** die zweiten Federmittel (13) so angeordnet sind, dass ihre Wirkungsrichtung nicht durch die Mitte des Werkzeugs verläuft.

8. Schälkopf nach einem der vorhergehenden Ansprüche, ***dadurch gekennzeichnet, dass*** die Schälmesser (10) in Führungen (10') geführt sind, deren Verhältnis Länge zu Breite größer als 1,5, vorzugsweise größer als 2, ist.

9. Verfahren zum Ausschälen eines Zylinders, Zylinderrohres oder dgl. mittels eines in den auszuschälenden Körper eingeführten Schälkopfes mit einer Mittelachse und einer Anzahl von Schälmessem, ***dadurch gekennzeichnet, dass*** ein Schälkopf gemäß Anspruch 1 mit wenigstens drei relativ zur Mittelachse des Schälkopfes radial beweglichen Schälmessern verwendet wird.

10. Verfahren nach Anspruch 9, wobei jedes Schälmesser wenigstens eine Schneide aufweist, ***dadurch gekennzeichnet, dass*** der radiale Abstand der Schneiden zur Mittelachse des Schälkopfes mittels eines im Schälkopf beweglich angeordneten konischen oder pyramidalen Körpers eingestellt wird.

11. Verfahren nach Anspruch 10, ***dadurch gekennzeichnet, dass*** die Schälmesser gegen den konischen oder pyramidalen Körper vorgespannt werden.

12. Verfahren nach Anspruch 10 oder 11, ***dadurch gekennzeichnet, dass*** der konische oder pyramidale Körper in eine erste Relativposition (Arbeitsposition) relativ zu den Schälmessern vorgespannt wird.

13. Verfahren nach Anspruch 12, ***dadurch gekennzeichnet, dass*** zum Verschieben des Schälkopfes im ausgeschälten Körper ohne Bearbeitung des Körpers der konische oder pyramidale Körper durch Anlegen einer äußeren insbesondere hydraulischen Kraft gegen die Vorspannung in eine zweite Relativposition gedrückt wird, in welcher der radiale Abstand der Schneiden zur Mittelachse des Schälkopfes kleiner ist als in der Arbeitsposition.

## Claims

1. A skiving head (9) for skiving out cylinders, cylinder tubes and the like, said skiving head having skiving blades arranged therein so as to be radially oscillating, **characterized in that** at least three skiving blades (10) are provided, that all of said skiving blades (10) are directly or indirectly supported by a common conical or pyramidal body (12) which is slidably disposed within the skiving head and by means of which said blades are slidable in the radial direction relative to the skiving head, that the conical or pyramidal body (12) is float-mounted within the skiving head (9) so as to be allowed to float with two degrees of freedom (12', 12''), and that second spring means (13) for biasing every skiving blade against the conical or pyramidal body (12) is provided.

2. The skiving head according to claim 1, said skiving head having a central axis (16'), **characterized in that** neighbouring skiving blades (10) are spaced a similar angular distance apart from one another as viewed in the direction of the central axis (16') of the skiving head (9).

3. The skiving head according to claim 1 or 2, said skiving head (9) having a central axis (16') and each skiving blade (10) having at least one cutting edge (3, 3'), **characterized in that** at least three cutting edges of different skiving blades are arranged so as to be rotationally symmetrical about the central axis of the skiving head.

4. The skiving head (9) according to claim 1, **characterized in that** means (15, 15') for variably establishing a first relative position of the conical or pyramidal body (12) to the skiving blades (10) is provided.

5. The skiving head according to claim 4, **characterized in that** first spring means (14) for biasing the conical or pyramidal body (12) to the first relative position is provided.

6. The skiving head according to claim 5, **characterized in that** the conical or pyramidal body is movable by an external, more specifically hydraulic, force (16) against the bias to a second relative position.

7. The skiving head according to claim 6, **characterized in that** the second spring means (13) is arranged so as to act in a direction that will not pass through the center of the tool.

8. The skiving head according to one of the afore mentioned claims, **characterized in that** the skiving blades (10) are guided in guide members (10') the length/width ratio of which is greater than 1.5, preferably greater than 2.

9. A method of skiving out a cylinder, a cylinder tube or the like by means of a skiving head that is provided with a central axis and a number of skiving blades and is introduced into the body to be skived out, **characterized in that** a skiving head according to claim 1 is used, said skiving head having at least three skiving blades that are movable in the radial direction relative to the central axis of the skiving head.

10. The method according to claim 9, each skiving blade having at least one cutting edge, **characterized in that** the radial distance of the blades from the central axis of the skiving head is adjusted by means of a conical or pyramidal body which is movably arranged within the skiving head.

11. The method according to claim 10, **characterized in that** the skiving blades are biased against the conical or pyramidal body.

12. The method according to claim 10 or 11, **characterized in that** the conical or pyramidal body is biased to a first relative position (work position) to the skiving blades.

13. The method according to claim 12, **characterized in that**, to move the skiving head within the skived out body without machining said body, the conical or pyramidal body is urged by an external, more specifically hydraulic, force against the bias to a second relative position in which the cutting edges are spaced a smaller radial distance from the central axis of the skiving head than in the work position.

## Revendications

1. Tête d'alésage (9) pour l'alésage de cylindres, de tubes cylindriques et similaire munie de lames d'alésage montées oscillantes dans la direction radiale dans ladite tête d'alésage, **caractérisée en ce que** trois lames d'alésage (10) au moins sont prévues, que toutes les lames d'alésage (10) sont en appui direct ou indirect sur un corps commun de forme conique ou pyramidale (12) qui est monté à coulissement dans la tête d'alésage et au moyen duquel lesdites lames d'alésage sont aptes à coulisser radialement par rapport à la tête d'alésage, que le corps conique ou pyramidal (12) est monté flottant à deux degrés de liberté (12', 12'') dans la tête d'alésage (9), et qu'un deuxième mécanisme faisant office de ressort (13) est prévu pour solliciter chaque lame d'alésage contre le corps conique ou pyramidal (12).

2. Tête d'alésage selon la revendication 1, ladite tête d'alésage comportant un axe central (16'), **caractérisée en ce que**, vues en direction de l'axe central (16') de la tête d'alésage (9), les lames d'alésage (10) voisines respectives sont séparées les unes des autres par un espace angulaire similaire.

3. Tête d'alésage selon la revendication 1 ou 2, ladite tête d'alésage (9) comportant un axe central (16') et chaque lame d'alésage (10) comportant au moins un tranchant (3, 3'), **caractérisée en ce qu'**au moins trois tranchants de différentes lames d'alésage sont rotationnellement symétriques par rapport à l'axe central de la tête d'alésage.

4. Tête d'alésage (9) selon la revendication 1,
**caractérisée en ce que** des moyens (15, 15') sont prévus pour déterminer de manière modifiable une première position relative du corps conique ou pyramidal (12) par rapport aux lames d'alésage (10).

5. Tête d'alésage selon la revendication 4, **caractérisée en ce qu'**un premier mécanisme faisant office de ressort (14) est prévu pour solliciter le corps conique ou pyramidal (12) dans la première position relative.

6. Tête d'alésage selon la revendication 5, **caractérisée en ce que** le corps conique ou pyramidal est destiné à être déplacé contre l'action du ressort dans une deuxième position relative en appliquant une force extérieure (16), notamment hydraulique.

7. Tête d'alésage selon la revendication 6, **caractérisée en ce que** le deuxième mécanisme faisant office de ressort (13) est disposé de manière à agir dans une direction qui ne passe pas par le centre de l'outil.

8. Tête d'alésage selon l'une quelconque des revendications précédentes, **caractérisée en ce que** les lames d'alésages (10) sont guidées dans des chemins de guidage (10') dont le rapport longueur sur largeur est supérieur à 1,5, de préférence supérieur à 2.

9. Procédé pour l'alésage de cylindres, de tubes cylindriques et similaire au moyen d'une tête d'alésage qui est munie d'un axe central et d'un nombre de lames d'alésage et est introduite dans le corps destiné à être alésé, **caractérisé en ce qu'**une tête d'alésage selon la revendication 1 munie d'au moins trois lames d'alésage mobiles dans une direction radiale par rapport à l'axe central de la tête d'alésage est utilisée.

10. Procédé selon la revendication 9, chaque lame d'alésage comportant au moins un tranchant, **caractérisé en ce que** l'écartement radial entre les tranchants et l'axe central de la tête d'alésage est ajusté au moyen d'un corps conique ou pyramidal monté mobile dans la tête d'alésage.

11. Procédé selon la revendication 10, **caractérisé en ce que** les lames d'alésage sont sollicitées contre le corps conique ou pyramidal.

12. Procédé selon la revendication 10 ou 11, **caractérisé en ce que** le corps conique ou pyramidal est sollicité dans une première position relative (position travail) par rapport aux lames d'alésage.

13. Procédé selon la revendication 12, **caractérisé en ce que**, pour déplacer la tête d'alésage dans le corps alésé sans usiner celui-ci, le corps conique ou pyramidal est poussé contre l'action du ressort, en appliquant une force extérieure, notamment hydraulique, dans une deuxième position relative dans laquelle l'écartement radial entre les tranchants et l'axe central de la tête d'alésage est moins important que dans la position travail.
